# EUROPÄISCHE PATENTSCHRIFT

(11) **EP 1 484 523 B1**
(45) Veröffentlichungstag und Bekanntmachung des Hinweises auf die Patenterteilung: **21.09.2005**
(21) Anmeldenummer: 03450140.3
(22) Anmeldetag: 02.06.2003
(51) Int. Cl.: F16D 43/25, F16D 43/14

(54) **Wärmeempfindliches Fliehkraftkupplungselement**
Thermo-responsive centrifugal coupling element
Elément d'accouplement centrifuge à réponse thermique

(43) Veröffentlichungstag der Anmeldung: 08.12.2004
(73) Patentinhaber: TCG UNITECH Aktiengesellschaft, 4560 Kirchdorf/Krems (AT)
(72) Erfinder: Götschhofer Alfred, A-4591 Molln (AT)
(74) Vertreter: Babeluk, Michael

(56) Entgegenhaltungen:
- EP-A- 0 363 013
- GB-A- 720 168
- GB-A- 938 532
- GB-A- 1 315 747
- US-A- 4 889 215

## Beschreibung

Die Erfindung betrifft ein Kupplungselement für ein über eine Antriebswelle angetriebenes Aggregat, insbesondere für eine Wasserpumpe, wobei das Kupplungselement ein fest mit der Antriebswelle verbundenes temperatur- und/oder drehzahlsensitives Kupplungsglied aufweist, welches temperatur- und/oder drehzahlabhängig auf einen anzutreibenden Teil des Aggregates einwirkt, wobei das Kupplungsglied durch eine Kupplungsscheibe gebildet ist, deren äußere Mantelfläche zumindest eine erste Kupplungsfläche zur kraftschlüssigen Verbindung mit einer entsprechenden, durch eine innere Mantelfläche des anzutreibenden Teiles geformten Gegenfläche bildet.

Aus der JP 60295904 (JP 62153596 A 19870708) A ist eine Wasserpumpe mit einem Hauptlaufrad und einem Nebenlaufrad bekannt, wobei Haupt- und Nebenlaufrad koaxial bezüglich einer Antriebswelle angeordnet sind. Das Hauptlaufrad ist starr mit einer Antriebswelle verbunden, das Nebenlaufrad ist auf dem Hauptlaufrad drehbar gelagert, wobei zwischen Hauptlaufrad und Nebenlaufrad ein temperatursensitives Kupplungsteil angeordnet ist. Ab einer vordefinierten Mindesttemperatur wird eine Drehverbindung zwischen dem Nebenlaufrad und dem Hauptlaufrad hergestellt, so dass das Nebenlaufrad mit dem Hauptlaufrad mit angetrieben wird. Auf diese Weise kann die Förderleistung der Wasserpumpe der benötigten Kühlleistung angepasst werden. Die Wasserpumpe weist aber einen relativ hohen Fertigungsaufwand auf.

Aus der US 4,917,225 A ist eine thermisch einkuppelnde Fliehkraftkupplung bekannt. Die Kupplung weist einen drehzahlempfindlichen Ring auf, welcher ab einer vorbestimmten Antriebswellendrehzahl ein Gleiten zwischen den Kupplungsteilen herbeiführt, um eine vorbestimmte maximale Antriebsdrehzahl für ein Aggregat nicht zu überschreiten.

Die US 3,105,580 A zeigt eine thermostatisch gesteuerte Kupplung, welche ein thermisch empfindliches Element aufweist, um einen Lüfter über einer vorbestimmten Temperatur zu betreiben. Das temperaturempfindliche Element ist als Bimetall ausgeführt, welches ab einer vorbestimmten Temperatur ein Kupplungsband kraftschlüssig an eine Kupplungsfläche einer Kupplungstrommel presst. Die Kupplung weist neben dem hohen konstruktiven- und Herstellungsaufwand den Nachteil auf, dass sie für Korrosionseinflüssen ausgesetzte Aggregate, wie beispielsweise Wasserpumpen, schlecht geeignet ist.

Die US 2,655,015 A beschreibt eine thermisch empfindliche Lamellenkupplung mit Kupplungsscheiben, welche durch ein thermisch sensitives Element mit hohem thermischen Ausdehnungskoeffizient aufeinander gedrückt werden. Auch diese Kupplung ist konstruktiv sehr aufwendig.

Aus der US 2,840,315 A ist ein thermostatisch gesteuerter Lüfter bekannt, welcher über eine Kupplungsscheibe durch einen Riemenantrieb angetrieben wird. Die Kupplungseinrichtung weist ein Thermostatelement auf, welches einen Federteil in Abhängigkeit der Temperatur stärker oder schwächer auf die Kupplungsscheibe einwirken lässt, so dass bei niedriger Temperatur der Lüfter unter Gleitreibung der Kupplungsscheibe, also unter Ausbildung eines gewissen Schlupfes relativ zur Antriebswelle, angetrieben wird. Bei höherer Temperatur dagegen ist der Lüfter kraftschlüssig mit der Antriebswelle verbunden und läuft mit dieser synchron um. Neben dem hohen konstruktiven Aufwand hat diese Kupplungseinrichtung den Nachteil, dass relativ viel Bauraum beansprucht wird.

Aus der US 1,315,747 A ist eine Kupplungseinrichtung für einen Kühlerventilator bekannt, wobei die Kupplung ein temperaturempfindliches Element mit einem unter Temperatureinfluss sich ausdehnenden Material, wie etwa Wachs oder Gummi, aufweist.

Die GB 720 168 A offenbart eine Zentrifugalkupplung mit einer Anzahl von voneinander beabstandeten Kupplungsblöcken, welche unter Einfluss der Fliehkraft nach außen gedrückt werden und somit an eine Kupplungstrommel gepresst werden. Die Kupplungsblöcke werden durch ein ringförmiges Kupplungselement angetrieben, welche mit den Kupplungsblöcken über einen ringförmigen Gummikörper verbunden sind.

Die GB 938 532 A zeigt eine weitere Zentrifugalkupplung, bei der ein scheibenförmiger Kupplungskörper unter Fliehkrafteinwirkung nach außen gegen eine Kupplungstrommel gepresst wird, wobei der Gummikörper auch durch ein sternförmiges Antriebselement nach außen gedrückt wird. Weitere Zentrifugalkupplungen sind aus der EP 0 363 013 A1 und der US 4,889,215 A bekannt, wobei Kupplungselemente elastisch nach außen gegen eine Kupplungstrommel gepresst werden.

Die bekannten Zentrifugal- und Thermokupplungselemente sind allerdings als Trockenkupplungen ausgebildet und eignen sich nicht für nassen Einsatz, etwa zum Antrieb einer Wasserpumpe, wobei die Kupplungsflächen zumindest fallweise mit einer Flüssigkeit wie beispielsweise Wasser beaufschlagt werden. Für den trockenen Einsatz ausgebildete Kupplungen würden bei nassem Einsatz versagen, da sich zwischen den Kupplungsflächen ein tragender Flüssigkeitsfilm ausbildet und somit einen auch als "Aquaplaning" bekannten Effekt verursacht.

Aufgabe der Erfindung ist es, ein temperatursensitives Kupplungselement zu entwickeln, welches mit möglichst geringem Aufwand herzustellen ist und wenig Bauraum beansprucht. Darüber hinaus soll das Kupplungselement wartungsarm und möglichst unempfindlich gegen korrosive Medien sein.

Erfindungsgemäß wird dies dadurch erreicht, dass die erste und/oder zweite Kupplungsfläche zumindest eine Drainage-Rille aufweist. Drainage-Rillen dieser Art sind besonders von Vorteil, wenn das Kupplungselement für Wasserpumpen eingesetzt ist. Dadurch lässt sich ein sogenannter "Aquaplaning-Effekt" vermeiden. Weiters dienen die Drainage-Rillen an der Kupplungsfläche zur Aufnahme und zum Abtransport möglicher Partikel im Wasserkreislauf.

Wesentlich ist, dass für die Kupplungsscheibe ein Werkstoff gewählt wird, welcher in dem gewünschten Betriebsbereich eine möglichst große Volumensänderung bei Temperaturdifferenzen erfährt. Vorzugsweise ist dazu vorgesehen, dass das Material der Kupplungsscheibe einen höheren thermischen Ausdehnungskoeffizienten aufweist, als die Antriebswelle und/oder der anzutreibende Teil.

Der anzutreibende Teil - beispielsweise das Laufrad einer Wasserpumpe - ist auf der Antriebswelle vorteilhafterweise drehbar gelagert und ist unterhalb einer vordefinierten Mindestdrehzahl der Antriebswelle und unterhalb einer vordefinierten Mindesttemperatur von der Antriebswelle entkoppelt. Die Kupplungsscheibe weist im kalten Zustand sowie im niedrigen Drehzahlbereich einen genau definierten Spalt zwischen der Kupplungsfläche der Kupplungsscheibe und einer entsprechenden Gegenfläche des anzutreibenden Teiles auf. Überschreitet die Temperatur der Kupplungsscheibe und/oder die Drehzahl der Antriebswelle einen vordefinierten Mindestwert, so kommt es zu einem Einkuppeln des Kupplungselementes. Ein Ansteigen der Temperatur bewirkt ein Ausdehnen und somit ein Einkuppeln der Kupplungsscheibe. Je nach Materialwahl für die Kupplungsscheibe kann die Empfindlichkeit zwischen thermischer- und Drehzahlempfindlichkeit variiert werden. Eine rein thermisch abhängige Kupplungsfunktion kann etwa durch thermoplastischen oder metallischen Werkstoff für die Kupplungsscheibe erreicht werden. Im letzteren Fall ist es auch möglich, ein Sintermetall, beispielsweise Sinterbronze, einzusetzen.

Zusätzlich zur thermischen Abhängigkeit lässt sich eine Drehzahlabhängigkeit besonders gut erreichen, wenn die Kupplungsscheibe, zumindest teilweise, aus einem Elastomer, vorzugsweise aus Acrylnitril-Butadien-Kautschuk, Acrylatkautschuk, Ethylen-Propylen-Kautschuk, Silikonkautschuk, Fluorkautschuk oder dergleichen besteht. Ein Ansteigen der Temperatur der Kupplungsscheibe bewirkt ein Ausdehnen des Materials und somit ein Einkuppeln der Kupplungsscheibe. Besteht diese aus Elastomer, so wird das Material durch die Temperatur erweicht und gewährleistet ein leichtes Dehnen durch die Fliehkraft und eine frühere Mitnahme des anzutreibenden Teiles. Bei optimaler Auslegung des Kupplungselementes ist es auch denkbar, eine Schlupfregelung bei hohen Drehzahlen und/oder großen Drehmomenten zu erzielen.

Vorzugsweise ist vorgesehen, dass die Kupplungsfläche verschleißfest ausgebildet ist. Eine verschleißfeste Oberfläche kann durch Besprühen oder Vulkanisieren der Kupplungsfläche erreicht werden.

Eine Erhöhung der Drehzahlempfindlichkeit der Kupplungsscheibe lässt sich erreichen, wenn die Kupplungsscheibe in Umfangsrichtung segmentiert ist, wobei vorzugsweise vorgesehen ist, dass die Segmentierung durch von der Kupplungsfläche, vorzugsweise radial oder spiralförmig, in einen inneren Bereich der Kupplungsscheibe verlaufende Einschnitte gebildet ist. Die Segmentierung bewirkt, dass die einzelnen radialen Segmente der Kupplungsscheibe unter Fliehkrafteinwirkung bereits bei relativ niedrigen Drehzahlen ausreichend radial nach außen gedrückt werden und ein Einkuppeln der Kupplungsscheibe mit dem anzutreibenden Teil bewirkt wird.

In weiterer Ausführung der Erfindung ist vorgesehen, dass Antriebswelle und Kupplungsscheibe formschlüssig miteinander verbunden sind. Dadurch wird ein sicherer Antrieb der Kupplungsscheibe erreicht. Besonders vorteilhaft ist es, wenn eine erste Stirnseite der Kupplungsscheibe eine zweite Kupplungsfläche zur kraftschlüssigen Verbindung mit einer entsprechenden, durch eine Stirnfläche des anzutreibenden Teiles geformte zweite Gegenfläche bildet. Dies ermöglicht eine besonders gute Drehmomentübersetzung. Weiters kann vorgesehen sein, dass im Bereich zumindest einer Stirnseite der Kupplungsscheibe eine mit der Antriebswelle fest verbundene Stützscheibe angeordnet ist. Die Stützscheibe verhindert, dass die Kupplungsscheibe in axialer Richtung ausweicht und ein Beulen der Kupplungsscheibe auftritt.

Besteht die Kupplungsscheibe aus einem Elastomer, so hat sich eine Shorehärte zwischen 60 bis 70 als vorteilhaft erwiesen.

Das erfindungsgemäße Kupplungselement besteht aus sehr wenigen Einzelteilen und beansprucht äußerst geringen Bauraum. Dadurch ist es möglich, dass das Kupplungselement innerhalb eines Gehäuses des Aggregates, insbesondere innerhalb eines Wasserpumpengehäuses angeordnet ist.

Die Erfindung wird im Folgenden anhand der Figuren näher erläutert. Es zeigen
- Fig. 1: ein erfindungsgemäßes Kupplungselement in einem Längsschnitt,
- Fig. 2: eine Kupplungsscheibe des Kupplungselementes in einer stirnseitigen Ansicht und
- Fig. 3: diese Kupplungsscheibe in einer Seitenansicht.

Ein im Ausführungsbeispiel durch eine Wasserpumpe gebildetes Aggregat 1 wird durch eine Antriebswelle 2 über ein Kupplungselement 3 angetrieben. Das Kupplungselement 3 weist ein temperatur- und/oder drehzahlabhängiges Kupplungsglied 4 auf, welches formschlüssig mit der Antriebswelle 2 verbunden ist. Das Kupplungsglied 4 wird durch eine Kupplungsscheibe 5 gebildet, deren äußere Mantelfläche eine erste Kupplungsfläche 6 ausbildet. Der im Ausführungsbeispiel durch ein Laufrad gebildete, anzutreibende Teil 7 weist eine entsprechende erste Gegenfläche 8 auf, auf welche die erste Kupplungsfläche 6 im eingekuppelten Zustand einwirkt.

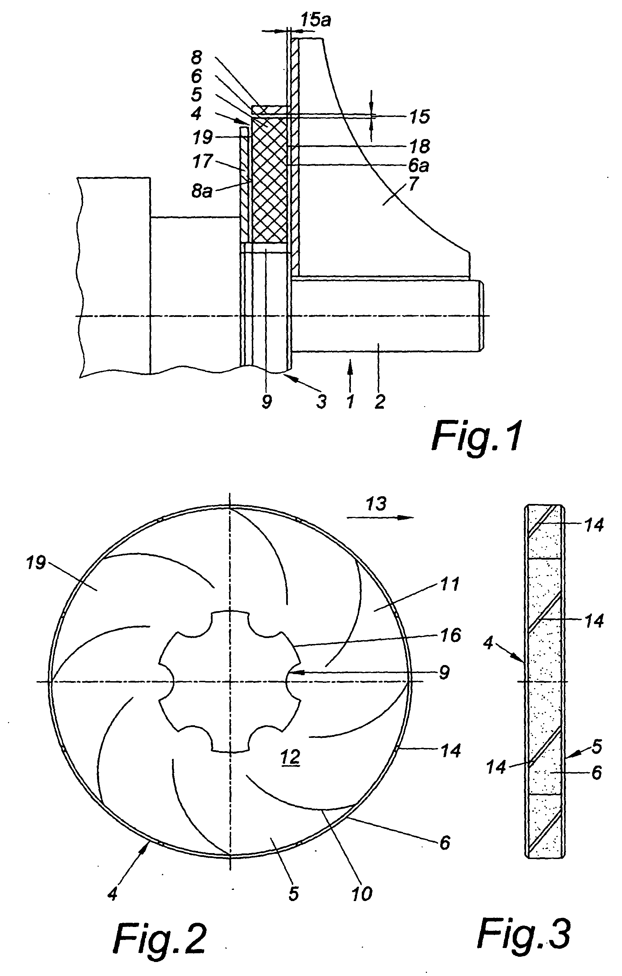

Die Formschlussverbindung 9 zwischen Kupplungsscheibe 5 und Antriebswelle 2 kann durch eine Verzahnung oder eine entsprechende Profilierung der Nabe 16 erreicht werden, wie insbesondere aus Fig. 2 hervorgeht.

Als Material für die Kupplungsscheibe 5 wird ein Werkstoff mit einem möglichst hohen thermischen Ausdehnungskoeffizienten im gewünschten Temperaturbereich - beispielsweise zwischen -40°C und 150°C - gewählt. Dabei kann die Kupplungsscheibe 5 beispielsweise aus Elastomeren, Thermoplasten oder Metallen bestehen. Durch die Wahl des Werkstoffes lässt sich das Ausmaß der Temperatur- und Drehzahlempfindlichkeit einstellen. Kupplungsscheiben 5 aus Thermoplasten und Metallen sind für rein thermische Funktionen geeignet. Kupplungsscheiben aus Metallen sind abriebfest und somit hoch beanspruchbar. Auch Sintermetall, beispielsweise Sinterbronze, kann eingesetzt werden.

Kupplungsscheiben 5 aus Elastomeren eignen sich, wenn sowohl eine thermischals auch drehzahlabhängige Kupplungsfunktion gewünscht ist. Der Kraftschluss erfolgt dabei sowohl über Wärmeausdehnung als auch über Fliehkraftausdehnung der Kupplungsscheibe 5. Für höhere Beanspruchungen kann die erste Kupplungsfläche 6 eventuell verschleißfest ausgeführt sein, beispielsweise durch Besprühen oder durch Aufvulkanisieren eines verschleißfesten Materials.

Besonders vorteilhaft für die Drehzahlsensitivität der Kupplungsscheibe 5 ist es, wenn die Kupplungsscheibe 5 entlang ihrer ersten Kupplungsfläche 6 um den Umfang herum segmentiert ist und schaufelförmige Einschnitte 10 zwischen der Kupplungsfläche 6 und einem nabennahen inneren Bereich 12 aufweist. Segmente sind in Fig. 2 mit Bezugszeichen 11 bezeichnet. Bezugszeichen 13 deutete die entsprechende Drehrichtung der Kupplungsscheibe 5 an. Die Segmentierung erlaubt der Kupplungsscheibe 5 eine unbehinderte radiale Ausdehnung zu Folge der Drehzahleinwirkung. Weiters kann auch im Bereich einer ersten Stirnseite 18 der Kupplungsscheibe 5 eine zweite Kupplungsfläche 6a angeordnet sein, welche im eingekuppelten Zustand mit einer durch eine Stirnfläche des anzutreibenden Teiles 7 gebildeten zweiten Gegenfläche 8a zusammenwirkt. Durch eine Stützscheibe 17 an einer zweiten Stirnseite 18 der Kupplungsscheibe 5 wird ein Beulen derselben verhindert und ein Abstützen ermöglicht.

Wie in Fig. 3 ersichtlich ist, ist die erste Kupplungsoberfläche 6 und/oder die zweite Kupplungsfläche 6a und/oder die entsprechenden Gegenflächen 8, 8a mit Drainage-Rillen 14 versehen, welche insbesondere bei Anwendung für eine Wasserpumpe einen sogenannten "Aquaplaning-Effekt" vermeiden und auch der Aufnahme und dem Abtransport möglicher Partikel im Wasserkreislauf dienen.

Unterhalb einer vordefinierten Mindestdrehzahl und einer Mindesttemperatur ist der anzutreibende Teil 7 drehbar (schwimmend) auf der Antriebswelle 2 gelagert und daher von der Antriebswelle 2 getrennt. Die Kupplungsscheibe 5 muss im kalten Zustand sowie im niedrigen Drehzahlbereich jeweils mit einem genau definierten Spalt 15, 15a zwischen den Kupplungsflächen 6, 6a der Kupplungsscheibe 5 und den entsprechenden Gegenflächen 8, 8a des Teiles 7 laufen. Steigt die Temperatur und/oder die Drehzahl über den Mindestwert an, so erfolgt ein Einkuppeln des Kupplungselementes 3.

Ein Ansteigen der Temperatur bewirkt dabei ein Ausdehnen und somit ein Einkuppeln der Kupplungsscheibe 5, das Erweichen des beispielsweise durch Elastomer gebildeten Materials der Kupplungsscheibe wiederum gewährleistet ein leichtes Dehnen durch die Fliehkraft und eine frühe Mitnahme des anzutreibenden Teiles 7. Bei optimaler Auslegung des Kupplungselementes 3 ist auch eine Schlupfregelung bei hohen Drehzahlen zu realisieren.

Der Einsatz des Kupplungselementes 3 bei einer Wasserpumpe einer Brennkraftmaschine hat den Vorteil, dass die Betriebstemperatur des Motors schnell erreicht werden kann und bewirkt eine entsprechende Kraftstoffersparnis. Da das Laufrad in der Warmlaufphase stillsteht bzw. in Folge hydrodynamischer Effekte im Spalt 15, 15a langsam mitdreht, kann der Kaltkreislauf des Kühlmittelsystems der Brennkraftmaschine schneller aufgeheizt werden. Dies bewirkt, dass die Betriebstemperatur der Brennkraftmaschine früher erreicht wird und frühzeitig die volle Heizleistung zur Verfügung steht.

## Patentansprüche

1. Kupplungselement (3) für ein über eine Antriebswelle (2) angetriebenes Aggregat (1), insbesondere für eine Wasserpumpe, wobei das Kupplungselement (3) ein fest mit der Antriebswelle (2) verbundenes temperatur- und/oder drehzahlsensitives Kupplungsglied (4) aufweist, welches temperatur- und/oder drehzahlabhängig auf einen anzutreibenden Teil (7) des Aggregates (1) einwirkt, wobei das Kupplungsglied (4) durch eine Kupplungsscheibe (5) gebildet ist, deren äußere Mantelfläche zumindest eine erste Kupplungsfläche (6) zur kraftschlüssigen Verbindung mit einer entsprechenden, durch eine innere Mantelfläche des anzutreibenden Teiles (7) geformten Gegenfläche (8) bildet, **dadurch gekennzeichnet, dass** die erste und/oder zweite Kupplungsfläche (6, 6a) zumindest eine Drainage-Rille (14) aufweist.

2. Kupplungselement (3) nach Anspruch 1, **dadurch gekennzeichnet, dass** eine erste Stirnseite (18) der Kupplungsscheibe (5) eine zweite Kupplungsfläche (6a) zur kraftschlüssigen Verbindung mit einer entsprechenden, durch eine Stirnfläche des anzutreibenden Teiles geformte zweite Gegenfläche (8a) bildet.

3. Kupplungselement (3) nach Anspruch 1 oder 2, **dadurch gekennzeichnet, dass** das Material der Kupplungsscheibe (5) einen höheren thermischen Ausdehnungskoeffizienten aufweist, als die Antriebswelle (2) und/oder der anzutreibende Teil (7).

4. Kupplungselement (3) nach einem der Ansprüche 1 bis 3, **dadurch gekennzeichnet, dass** die Kupplungsscheibe (5), zumindest teilweise, aus einem Elastomer, vorzugsweise aus Acrylnitril-Butadien-Kautschuk, Acrylatkautschuk, Ethylen-Propylen-Kautschuk, Silikonkautschuk, Fluorkautschuk oder dergleichen besteht.

5. Kupplungselement (3) nach Anspruch 4, **dadurch gekennzeichnet, dass** der Werkstoff der Kupplungsscheibe (5) eine Shorehärte von etwa 60 bis 70 aufweist.

6. Kupplungselement (3) nach einem der Ansprüche 1 bis 5, **dadurch gekennzeichnet, dass** die Kupplungsscheibe (5), zumindest teilweise, aus einem thermoplastischen Werkstoff besteht.

7. Kupplungselement (3) nach einem der Ansprüche 1 bis 6, **dadurch gekennzeichnet, dass** die Kupplungsscheibe (5) zumindest teilweise aus einem metallischen Werkstoff besteht.

8. Kupplungselement (3) nach Anspruch 7, **dadurch gekennzeichnet, dass** die Kupplungsscheibe (5) zumindest teilweise aus einem Sintermetall, vorzugsweise aus Sinterbronze, besteht.

9. Kupplungselement (3) nach einem der Ansprüche 1 bis 8, **dadurch gekennzeichnet, dass** die erste und/oder zweite Kupplungsfläche (6) verschleißfest ausgebildet ist.

10. Kupplungselement (3) nach einem der Ansprüche 1 bis 9, **dadurch gekennzeichnet, dass** die Kupplungsscheibe (5) in Umfangsrichtung segmentiert ist.

11. Kupplungselement nach Anspruch 10, **dadurch gekennzeichnet, dass** die Segmentierung durch von der ersten Kupplungsfläche (6), vorzugsweise radial oder spiralförmig, in einen inneren Bereich (12) der Kupplungsscheibe (5) verlaufende Einschnitte (10) gebildet ist.

12. Kupplungselement (3) nach einem der Ansprüche 1 bis 11, **dadurch gekennzeichnet, dass** Antriebswelle (2) und Kupplungsscheibe (5) formschlüssig miteinander verbunden sind.

13. Kupplungselement (3) nach einem der Ansprüche 1 bis 12, **dadurch gekennzeichnet, dass** im Bereich zumindest einer zweiten Stirnseite (19) der Kupplungsscheibe (5) eine mit der Antriebswelle (2) fest verbundene Stützscheibe (17) angeordnet ist.

14. Kupplungselement (3) nach einem der Ansprüche 1 bis 13, **dadurch gekennzeichnet, dass** der anzutreibende Teil (7) drehbar auf der Antriebswelle (2) gelagert ist.

15. Kupplungselement (3) nach einem der Ansprüche 1 bis 14, **dadurch gekennzeichnet, dass** das Kupplungselement (3) innerhalb eines Gehäuses des Aggregates (1), insbesondere innerhalb eines Wasserpumpengehäuses angeordnet ist.

## Claims

1. A clutch element (3) for a unit (1) driven via a drive shaft (2), especially for a water pump, with the clutch element (3) comprising a temperature- and/or speed-sensitive clutch member (4) which is rigidly connected with the drive shaft (2) and which acts on a part (7) of the unit (1) to be driven depending on the temperature and/or rotational speed, with the clutch member (4) being formed by a clutch disk (5) whose outside jacket surface forms at least a first clutch surface (6) for the non-positive connection with a respective counter-surface (8) formed by an inner jacket surface of the part (7) to be driven, **characterized in that** the first and/or second clutch surface (6, 6a) comprises at least one drainage groove (14).

2. A clutch element (3) according to claim 1, **characterized in that** a first face side (18) of the clutch disk (5) forms a second clutch surface (6a) for the non-positive connection with a respective second counter-surface (8a) formed by a face surface of the part to be driven.

3. A clutch element (3) according to claim 1 or 2, **characterized in that** the material of the clutch disk (5) has a higher coefficient of thermal expansion than the drive shaft (2) and/or the part (7) to be driven.

4. A clutch element (3) according to one of the claims 1 to 3, **characterized in that** the clutch disk (5) consists at least in part of an elastomer, preferably acrylonitrile-butadiene caoutchouc, acrylate caoutchouc, ethylenepropylene caoutchouc, silicone caoutchouc, fluorocaoutchouc or the like.

5. A clutch element (3) according to claim 4, **characterized in that** the material of the clutch disk (5) has a Shore hardness of approximately 60 to 70.

6. A clutch element (3) according to one of the claims 1 to 5, **characterized in that** the clutch disk (5) consists at least in part of a thermoplastic material.

7. A clutch element (3) according to one of the claims 1 to 6, **characterized in that** the clutch disk (5) consists at least in part of a metallic material.

8. A clutch element (3) according to claim 7, **characterized in that** the clutch disk (5) consists at least in part of a sintered material, preferably sintered bronze.

9. A clutch element (3) according to one of the claims 1 to 8, **characterized in that** the first and/or second clutch surface (6) is provided with a wear-proof configuration.

10. A clutch element (3) according to one of the claims 1 to 9, **characterized in that** the clutch disk (5) is segmented in the circumferential direction.

11. A clutch element (3) according to claim 10, **characterized in that** the segmenting is formed by indentations (10) which extend from the first clutch surface (6) into an inner region (12) of the clutch disk (5), preferably in a radial or spiral manner.

12. A clutch element (3) according to one of the claims 1 to 11, **characterized in that** the drive shaft (2) and the clutch disk (5) are connected with each other in a positive-locking manner.

13. A clutch element (3) according to one of the claims 1 to 12, **characterized in that** a supporting disk (17) which is rigidly connected with the drive shaft (2) is arranged in the region of at least a second face side (19) of the clutch disk (5).

14. A clutch element (3) according to one of the claims 1 to 13, **characterized in that** the part (7) to be driven is held in a rotatable way on the drive shaft (2).

15. A clutch element (3) according to one of the claims 1 to 14, **characterized in that** the clutch element (3) is arranged within a housing of the unit (1), especially within a water pump housing.

## Revendications

1. Elément d'embrayage (3) pour une unité (1) entraînée par un arbre d'entraînement (2), notamment une pompe à eau, cet élément d'embrayage (3) ayant un organe d'embrayage (4) solidaire de l'arbre d'entraînement (2) et sensible à la température et/ou à la vitesse de rotation, et cet organe d'embrayage agit en fonction de la température et/ou de la vitesse de rotation sur une partie (7) à entraîner de l'unité (1),
l'organe d'embrayage (4) étant formé par un disque d'embrayage (5) dont la surface enveloppe extérieure forme au moins une première surface d'embrayage (6) pour être reliée par une liaison de force à une contre surface (8) correspondante, formée par la surface enveloppe intérieure de la pièce (7) à entraîner,
**caractérisé en ce que**
la première et/ou la seconde surface d'embrayage (6, 6a) ont au moins une rainure de drainage (14).

2. Elément d'embrayage (3) selon la revendication 1,
**caractérisé en ce que**
une première surface frontale (18) du disque d'embrayage (5) forme une seconde surface d'embrayage (6a) pour une liaison par la force avec une seconde contre surface (8b) correspondante, formée par une surface frontale de la pièce à entraîner.

3. Elément d'embrayage (3) selon l'une quelconque des revendications 1 ou 2,
**caractérisé en ce que**
la matière du disque d'embrayage (5) a un coefficient de dilatation thermique plus élevé que celui de l'arbre d'entraînement (2) et/ou de la pièce (7) à entraîner.

4. Elément d'embrayage (3) selon l'une quelconque des revendications 1 à 3,
**caractérisé en ce que**
le disque d'embrayage (5) est formé au moins en partie d'un élastomère de préférence en caoutchouc acrylnitril-butadiène, en caoutchouc d'acrylate, en caoutchouc éthylène-propylène, en caoutchouc au silicone, en caoutchouc au fluor ou analogue.

5. Elément d'embrayage (3) selon la revendication 4,
**caractérisé en ce que**
la matière du disque d'embrayage (5) a une dureté Shore comprise entre environ 60 et 70.

6. Elément d'embrayage (3) selon l'une quelconque des revendications 1 à 5,
**caractérisé en ce que**
le disque d'embrayage (5) est au moins en partie réalisé en une matière thermoplastique.

7. Elément d'embrayage (3) selon l'une quelconque des revendications 1 à 6,
**caractérisé en ce que**
le disque d'embrayage (5) est réalisé au moins en partie en une matière métallique.

8. Elément d'embrayage (3) selon la revendication 7,
**caractérisé en ce que**
le disque d'embrayage (5) est au moins en partie en un métal fritté, de préférence en bronze fritté.

9. Elément d'embrayage (3) selon l'une quelconque des revendications 1 à 8,
**caractérisé en ce que**
la première et/ou la seconde surface d'embrayage (6) sont résistantes à l'usure.

10. Elément d'embrayage (3) selon l'une quelconque des revendications 1 à 9,
**caractérisé en ce que**
le disque d'embrayage (5) est segmenté dans sa direction périphérique.

11. Elément d'embrayage (3) selon la revendication 10,
**caractérisé en ce que**
la segmentation est formée par des entailles (10) de préférence radiales ou en spirales partant de la première surface d'embrayage (6), pour rejoindre une zone intérieure (12) du disque d'embrayage (5).

12. Elément d'embrayage (3) selon l'une quelconque des revendications 1 à 11,
**caractérisé en ce que**
l'arbre d'entraînement (2) et le disque d'embrayage (5) sont reliés par une liaison de forme.

13. Elément d'embrayage (3) selon l'une quelconque des revendications 1 à 12,
**caractérisé en ce qu'**
au niveau d'au moins une seconde surface frontale (19) du disque d'embrayage (5), un disque d'appui (17) est relié solidairement à l'arbre d'entraînement (2).

14. Elément d'embrayage (3) selon l'une quelconque des revendications 1 à 13,
**caractérisé en ce que**
la partie (7) à entraîner est montée en rotation sur l'arbre d'entraînement (2).

15. Elément d'embrayage (3) selon l'une quelconque des revendications 1 à 14,
**caractérisé en ce qu'**
il est logé dans un boîtier de l'unité (1), notamment dans le corps d'une pompe à eau.
